(19) Europäisches Patentamt
European Patent Office
Office européen des brevets

(11) EP 3 150 654 B1

(12) **EUROPEAN PATENT SPECIFICATION**

(45) Date of publication and mention of the grant of the patent:
**24.02.2021 Bulletin 2021/08**

(21) Application number: **15800376.4**

(22) Date of filing: **28.05.2015**

(51) Int Cl.:
***C08G 69/40*** *(2006.01)* ***C08L 77/00*** *(2006.01)*

(86) International application number:
**PCT/JP2015/065362**

(87) International publication number:
**WO 2015/182693 (03.12.2015 Gazette 2015/48)**

# (54) TERMINAL-MODIFIED POLYAMIDE RESIN, METHOD FOR PRODUCING SAME, AND METHOD FOR PRODUCING MOLDED ARTICLES

ENDMODIFIZIERTES POLYAMIDHARZ, HERSTELLUNGSVERFAHREN DAFÜR UND VERFAHREN ZUR HERSTELLUNG VON GEFORMTEN GEGENSTÄNDEN

RÉSINE DE POLYAMIDE À TERMINAISON MODIFIÉE, SON PROCÉDÉ DE PRODUCTION, ET PROCÉDÉ DE PRODUCTION D’ARTICLES MOULÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.05.2014 JP 2014112414**

(43) Date of publication of application:
**05.04.2017 Bulletin 2017/14**

(73) Proprietor: **Toray Industries, Inc.**
**Tokyo 103-8666 (JP)**

(72) Inventors:
- **OKUBO, Takuro**
**Nagoya-shi**
**Aichi 455-8502 (JP)**
- **TANAKA, Tsuyoshi**
**Nagoya-shi**
**Aichi 455-8502 (JP)**
- **KATO, Koya**
**Nagoya-shi**
**Aichi 455-8502 (JP)**

(74) Representative: **Mewburn Ellis LLP**
**Aurora Building**
**Counterslip**
**Bristol BS1 6BX (GB)**

(56) References cited:
**EP-A1- 0 471 960**
**JP-A- H08 217 856**
**JP-A- 2004 518 006**
**JP-A- 2004 530 788**
**JP-A- 2012 503 044**
**US-A- 5 342 918**
**US-B1- 6 399 713**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 150 654 B1

## Description

The present invention relates to a terminal modified polyamide resin having a specific terminal structure and a low melt viscosity.

## Background Art

Polyamide resins, which have excellent mechanical, thermal, and other characteristics, have been widely used as materials of various molded articles such as fibers, various containers, films, electrical and electronic equipment components, automotive parts, and machine parts.

There has recently been an increasing demand for molded articles with smaller sizes, more complicated shapes, thinner walls, and lighter weights, and thus there is a need to develop materials excellent in molding processability and mechanical characteristics. Also, from the standpoint of reduction in mold processing temperature and molding cycle, there is a need for improved molding processability that contributes to the reduction in environmental load and energy cost. It is generally known that polyamide resins having higher molecular weights have more excellent mechanical characteristics, but such polyamide resins also have higher melt viscosities and thus have lower molding processability.

There has previously been proposed a polyamide resin having excellent mechanical properties and moldability, terminated with a hydrocarbon group of 6 to 22 carbon atoms and having a relative viscosity of 2 to less than 2.5 (see Patent Document 1, for example). However, the melt viscosity of this polyamide resin is still high, and its molding processability is insufficient for the recent demand for molded articles with smaller sizes, more complicated shapes, thinner walls, and lighter weights. There has been proposed a block copolyether amide suitable for injection molding, including polyamide blocks and polyalkylene ether blocks chemically bonded to each other (see Patent Document 2, for example). There has also been proposed a polyether amide elastomer in which a polyalkylene diamine is copolymerized (see Patent Document 3, for example). There has also been proposed a thermoplastic polymer including polyalkylene ether blocks having high hydrophilicity and antistatic properties (see Patent Document 4, for example). Furthermore, there has been disclosed an aromatic polyamide terminated with a polyethylene glycol monomethyl ether copolymer (see Non-Patent Document 1, for example).

## Prior Art Documents

Patent Document 1: JP 06-145345 A; Patent Document 2: U.S. Patent No. 5387651; Patent Document 3: WO 2012/132084; and Patent Document 4: WO 2003/002668. US 6399713 B proposes block copolymers of the formula hydrocarbon-polyether-polyamide-polyether-hydrocarbon, and their use as gelling agents for organic solvents. Various example copolymers comprise polyamide units derived from ethylene diamine and dimer acids.

Non-Patent Document 1: Journal of science (J.Polym.Sci.): Part A: Polymer chemistry edition (Polym.Chem.), 2003, vol. 41, pp. 1341 to 1346

## Summary of the Invention

However, the melt viscosities of the block copolyether amide and the polyether ester amide described in Patent Documents 2 and 3 are also still high, and their molding processability is insufficient. In addition, the block copolyether amide and the polyether ester amide have low cold crystallization temperatures and thus slowly solidify in molds during injection molding, resulting in prolonged molding cycles. Although Patent Document 4 and Non-Patent Document 1 have disclosed a polyamide resin and an oligomer terminated with polyethylene glycol amine and polyethylene glycol monomethyl ether as a hydrophilic triblock linear polyamide resin and a triblock polyester amide, these are both low molecular weight, and there has been a need to achieve both molding processability and a high molecular weight.

It is an object of the present invention to provide a high molecular weight, terminal modified polyamide resin having excellent molding processability and crystallinity, and a molded article made of the resin.

To achieve a reduction in melt viscosity of a high molecular weight polyamide resin, the inventors studied molecular entanglement and the increase in molecular weight to discover that introducing a specific polyalkylene ether structure into terminals of a polyamide resin can provide a high molecular weight polyamide resin with a low melt viscosity and a high cold crystallization temperature, thus providing a high molecular weight polyamide resin having excellent molding processability and crystallinity. The invention provides a terminal modified polyamide resin, a method for producing the terminal modified polyamide resin and a method for producing a molded article as defined in the accompanying claims.

Thus, a polyamide resin of the present invention has the following structure:

(1) A terminal modified polyamide resin having a relative viscosity (ηr), as measured at 25°C in a 98% sulfuric acid

solution at a resin concentration of 0.01 g/ml, of 2.1 to 10, the resin comprising 0.05 to 4.5% by mass of a terminal structure represented by general formula (I), and the resin is selected from polyamide 6, polyamide 66, polyamide 56, polyamide 410, polyamide 510, polyamide 610, polyamide 6/66, polyamide 6/12, polyamide 9T, polyamide 10T, and copolymers thereof, terminated with the structure represented by general formula (I):

$$-X-(R^1-O)_n-R^2 \qquad (I)$$

wherein n ranges from 2 to 100; $R^1$ represents a divalent hydrocarbon group of 2 to 10 carbon atoms; $R^2$ represents a monovalent hydrocarbon group of 1 to 30 carbon atoms; -X- represents -NH- or $-N(CH_3)-$; and n $R^1$s in the formula may be the same or different.

Preferred aspects of the polyamide resin of the present invention include the following:

(2) The terminal modified polyamide resin according to the foregoing, comprising the terminal structure represented by the general formula (I) in an amount of 0.005 to 0.08 mmol/g;

(3) The terminal modified polyamide resin according to any of the foregoing, wherein n in the general formula (I) is 16 to 100;

(4) The terminal modified polyamide resin according to any of the foregoing, wherein $R^1$ in the general formula (I) comprises at least a divalent saturated hydrocarbon group of 2 carbon atoms and a divalent saturated hydrocarbon group of 3 carbon atoms; and

(5) The terminal modified polyamide resin according to any of the foregoing, wherein the resin has a weight average molecular weight (Mw), as determined by gel permeation chromatography, of 40,000 to 400,000.

The present invention includes the following polyamide resin composition and the following method for producing a molded article:

(6) A polyamide resin composition comprising the terminal modified polyamide resin according to any of the foregoing; and

(7) A method for producing a molded article, the method comprising:

melt-molding the terminal modified polyamide resin according to any of the foregoing or the polyamide resin composition according to the foregoing.

A preferred method for producing the polyamide resin of the present invention has the following structure:

(8) A method for producing the terminal modified polyamide resin according to any of the foregoing, the method comprising binding a terminal modification agent to a terminal of a polyamide resin while polymerizing an amino acid, a lactam, and/or a diamine and a dicarboxylic acid, the terminal modification agent being in an amount of 0.05 to 4.5% by mass based on the total amount of the amino acid, the lactam, the diamine, and the dicarboxylic acid and being represented by general formula (II):

$$Y-(R^1-O)_n-R^2 \qquad (II)$$

wherein n ranges from 2 to 100; $R^1$ represents a divalent hydrocarbon group of 2 to 10 carbon atoms; $R^2$ represents a monovalent hydrocarbon group of 1 to 30 carbon atoms; Y- represents an amino group or an *N*-methylamino group; and n $R^1$s in the formula may be the same or different;

(9) The method for producing a terminal modified polyamide resin according to the foregoing, wherein the terminal modification agent represented by the general formula (II) has a number average molecular weight of 750 to 10,000; and

(10) The method for producing a terminal modified polyamide resin according to any of the foregoing, wherein $R^1$ in the general formula (II) comprises at least a divalent saturated hydrocarbon group of 2 carbon atoms and a divalent saturated hydrocarbon group of 3 carbon atoms.

## Effects of the Invention

A high molecular weight, terminal modified polyamide resin of the present invention has a low melt viscosity and thus has excellent molding processability. In addition, the high molecular weight, terminal modified polyamide resin of the present invention has a high cold crystallization temperature and excellent crystallinity, and thus rapidly solidifies in a mold during melt molding such as injection molding, which enables a shortened molding cycle.

## Mode for Carrying Out the Invention

The present invention will now be described in detail.

The terminal modified polyamide resin in the present invention is a polyamide resin that can be obtained using at least one selected from an amino acid, a lactam, and a mixture of a diamine and a dicarboxylic acid as a main raw

material, and has the terminal structure represented by the above general formula (I). When an amino acid or a lactam is used as a raw material, the main structural unit of the polyamide resin preferably has a chemical structure containing 4 to 20 carbon atoms. When a diamine and a dicarboxylic acid are used as raw materials, the carbon number of the diamine is preferably in the range of 2 to 20, and the carbon number of the dicarboxylic acid is preferably in the range of 2 to 20. Typical examples of the raw materials include the following.

Amino acids such as 6-aminocaproic acid, 11-aminoundecanoic acid, 12-aminododecanoic acid, and *p*-aminomethylbenzoic acid. Lactams such as ε-caprolactam, ω-undecanelactam, and ω-laurolactam. Diamines including aliphatic diamines such as ethylenediamine, trimethylenediamine, tetramethylenediamine, pentamethylenediamine, hexamethylenediamine, heptamethylenediamine, octamethylenediamine, nonamethylenediamine, decanediamine, undecanediamine, dodecanediamine, tridecanediamine, tetradecanediamine, pentadecanediamine, hexadecanediamine, heptadecanediamine, octadecanediamine, nonadecanediamine, eicosanediamine, 2-methyl-1,5-diaminopentane, and 2-methyl-1,8-diaminooctane; alicyclic diamines such as cyclohexanediamine, bis-(4-aminocyclohexyl)methane, and bis(3-methyl-4-aminocyclohexyl)methane; and aromatic diamines such as xylylenediamine. Aliphatic dicarboxylic acids such as oxalic acid, malonic acid, succinic acid, glutaric acid, adipic acid, suberic acid, azelaic acid, sebacic acid, undecanedioic acid, and dodecanedioic acid; aromatic dicarboxylic acids such as terephthalic acid, isophthalic acid, 2-chloroterephthalic acid, 2-methylterephthalic acid, 5-methylisophthalic acid, 5-sodium sulfoisophthalic acid, hexahydroterephthalic acid, and hexahydroisophthalic acid; alicyclic dicarboxylic acids such as cyclohexanedicarboxylic acid; and dialkyl esters and dichlorides of these dicarboxylic acids.

In the present invention, polyamide homopolymers or copolymers derived from these raw materials can be used. The polyamide resin may be a mixture of two or more such polyamides. In the present invention, from the stand point of improving heat resistance and crystallinity, the polyamide resin preferably contains the structural unit derived from any of the raw materials listed above in an amount of 80 mol% or more, more preferably 90 mol% or more, still more preferably 100 mol%, based on all repeating structural units constituting the polyamide resin excluding the terminal structure represented by the general formula (I). The polymer structure derived from any of the raw materials listed above is preferably linear.

The terminal modified polyamide resin of the present invention has a terminal structure represented by general formula (I) below. The structure represented by the general formula (I) below, due to having ether linkages, provides a polymer with high molecular mobility and has a high affinity for amide groups. The structure represented by the general formula (I) below, which is located at terminals of the polyamide resin, intervenes between polyamide molecular chains, thus increasing the free volume of the polymer and reducing the entanglement. This significantly increases the molecular mobility of the polymer and reduces the melt viscosity, resulting in improved molding processability. This effect is extremely high as compared to when the polyamide resin mainly has a polyalkylene ether structure in its main chain. Furthermore, the significantly increased molecular mobility of the polyamide resin allows the polyamide molecular chains to be easily folded to facilitate crystallization, thus leading to a high cold crystallization temperature (Tc). Thus, the terminal modified polyamide resin of the present invention has a small temperature difference (Tm - Tc) between melting point and cold crystallization temperature and rapidly solidifies in a mold, particularly in injection molding, which enables a shortened molding cycle time. (Tm - Tc) of the polyamide resin of the present invention is preferably 42°C or less.

$$-X-(R^1-O)_n-R^2 \qquad (I)$$

In the general formula (I), n ranges from 2 to 100. If n is small, the melt-viscosity-reducing effect and the Tc-increasing effect will be not sufficient, resulting in poor molding processability and crystallinity. n is preferably 5 or more, more preferably 8 or more, still more preferably 16 or more. If n is excessively large, the heat resistance will be poor. n is preferably 70 or less, more preferably 50 or less. From the stand point of retaining the properties derived from the main structural unit of the polyamide resin, the polyamide resin preferably has the structure represented by the above general formula (I) only at its terminals.

In the above general formula (I), $R^1$ represents a divalent hydrocarbon group of 2 to 10 carbon atoms. From the viewpoint of the affinity for the main structural unit of the polyamide resin, $R^1$ is more preferably a hydrocarbon group of 2 to 6 carbon atoms, still more preferably a hydrocarbon group of 2 to 4 carbon atoms. From the viewpoint of thermal stability and color protection of the terminal modified polyamide resin, $R^1$ is yet still more preferably a saturated hydrocarbon group. Examples of $R^1$ include ethylene group, 1,3-trimethylene group, isopropylene group, 1,4-tetramethylene group, 1,5-pentamethylene group, and 1,6-hexamethylene group, and n $R^1$s may be a combination of hydrocarbon groups of different carbon numbers. $R^1$ preferably comprises at least a divalent saturated hydrocarbon group of carbon atoms and a divalent saturated hydrocarbon group of 3 carbon atoms. $R^1$ more preferably comprises an ethylene group, which has a high affinity for the main structural unit of the polyamide resin, and an isopropylene group, which has a large free volume. This configuration can more effectively produce a melt-viscosity-reducing effect. In this case, the structure represented by the general formula (I) preferably includes at least 10 ethylene groups and up to 6 isopropylene groups. This is because near the desired amount of the terminal structure can be introduced into terminals of the polyamide

resin, and the melt-viscosity-reducing effect can be increased. $R^2$ represents a monovalent hydrocarbon group of 1 to 30 carbon atoms. The smaller the carbon number of $R^2$, the higher the affinity for the main structural unit of the polyamide resin, and thus $R^2$ is preferably a hydrocarbon group of 1 to 20 carbon atoms. From the viewpoint of thermal stability and color protection of the terminal modified polyamide resin, $R^2$ is more preferably a monovalent saturated hydrocarbon group.

In the above general formula (I), -X- represents -NH- or -N($CH_3$)-. Of these, -NH-, which has a high affinity for the main structural unit of the polyamide resin, is more preferred.

The terminal modified polyamide resin has the terminal structure represented by the above general formula (I) at at least some of the polyamide resin terminals.

The terminal structure represented by the above general formula (I) is contained in an amount of 0.05 to 4.5% by mass based on 100% by mass of the terminal modified polyamide resin. Not less than 0.05% by mass of the terminal structure represented by the above general formula (I) in the terminal modified polyamide resin reduces the melt viscosity of the terminal modified polyamide resin, leading to improved molding processability. The amount of the terminal structure is more preferably 0.08% by mass or more, still more preferably 0.1% by mass or more, yet still more preferably 0.5% by mass or more, most preferably 1.0% by mass or more. Not more than 4.5% by mass of the terminal structure represented by the above general formula (I) in the terminal modified polyamide resin easily provides the terminal modified polyamide resin with a higher molecular weight. The amount of the terminal structure represented by the above general formula (I) in the terminal modified polyamide resin can be determined from Rc (mmol/g), which will be described below, and a number average molecular weight of the terminal structure represented by the general formula (I).

The terminal structure represented by the above general formula (I) is preferably contained in an amount of 0.005 to 0.08 mmol per gram of the terminal modified polyamide resin. Not less than 0.005 mmol of the terminal structure represented by the above general formula (I) per gram of the terminal modified polyamide resin reduces the melt viscosity of the terminal modified polyamide resin, leading to improved molding processability. The amount of the terminal structure is more preferably 0.007 mmol/g or more, still more preferably 0.01 mmol/g or more. Not more than 0.08 mmol/g of the terminal structure represented by the above general formula (I) per gram of the terminal modified polyamide resin easily provides the terminal modified polyamide resin with a higher molecular weight. The amount of the terminal structure is more preferably 0.05 mmol/g or less. The amount Rc (mmol/g) of the terminal structure represented by the above general formula (I) in the terminal modified polyamide resin can be determined by $^1$H-NMR measurement. The methods of measurement and calculation are as described below.

A solution of the terminal modified polyamide resin in deuterated sulfuric acid at a concentration of 50 mg/mL is prepared and subjected to $^1$H-NMR measurement with cumulative number of 256 times. Rc can be determined from a spectrum integral of $R^2$, a spectrum integral of the repeating structural unit of the polyamide resin backbone, and a molecular weight of the repeating structural unit of the polyamide resin backbone using the following equation (III):

$$\text{Rc (\%)} = \{(\text{spectrum integral of } R^2)/(\text{the number of hydrogen atoms in } R^2)\}/[\{(\text{spectrum integral of repeating structural unit of polyamide resin backbone})/(\text{the number of hydrogen atoms in repeating structural unit of polyamide resin backbone})\} \times (\text{molecular weight of repeating structural unit of polyamide resin backbone})] \times 100 \qquad \text{(III)}.$$

The terminal modified polyamide resin preferably has a melting point (Tm) of 200°C or higher. The melting point of the terminal modified polyamide resin can be determined by differential scanning calorimetry (DSC). The method of measurement is as follows: The terminal modified polyamide resin is weighed to 5 to 7 mg. The resin is heated from 20°C to (Tm + 30°C) at a heating rate of 20°C/min in a nitrogen atmosphere. The resin is then cooled to 20°C at a cooling rate of 20°C/min. The resin is heated again from 20°C to (Tm + 30°C) at a heating rate of 20°C/min. The melting point (Tm) is defined as a temperature at the apex of an endothermic peak observed in this reheating process.

Examples of a terminal modified polyamide resin having a melting point of 200°C or higher include the following polyamides and copolymers thereof terminated with the structure represented by the above general formula (I). These may be used in combination of two or more according to the required properties, such as heat resistance, toughness, and surface properties. Examples of polyamides include polycaproamide (polyamide 6), polyundecaneamide (polyamide 11), polydodecaneamide (polyamide 12), polyhexamethylene adipamide (polyamide 66), polytetramethylene adipamide (polyamide 46), polypentamethylene adipamide (polyamide 56), polytetramethylene sebacamide (polyamide 410), polypentamethylene sebacamide (polyamide 510), polyhexamethylene sebacamide (polyamide 610), polyhexamethylene dodecamide (polyamide 612), polydecamethylene sebacamide (nylon 1010), polydecamethylene dodecamide (nylon 1012), polymetaxylylene adipamide (MXD6), polymetaxylylene sebacamide (MXD10), polyparaxylylene sebacamide (PXD10), polynonamethylene terephthalamide (nylon 9T), polydecamethylene terephthalamide (polyamide 10T), polyundecamethylene terephthalamide (polyamide 11T), polydodecamethylene terephthalamide (polyamide 12T), polypentamethylene terephthalamide/polyhexamethylene terephthalamide copolymer (polyamide 5T/6T), poly-2-methylpentamethylene terephthalamide/polyhexamethylene terephthalamide (polyamide M5T/6T), polyhexamethylene adipamide/polyhexamethylene terephthalamide copolymer (polyamide 66/6T), polyhexamethylene adipamide/polyhexamethylene isophthalamide copolymer (polyamide 66/6I), polyhexamethylene adipamide/polyhexamethylene terephthalamide/polyhexamethylene isophthalamide (polyamide 66/6T/6I), polybis(3 -methyl-4-aminocyclohexyl)methane terephthalamide (polyamide MACMT), polybis(3 -methyl-4-aminocyclohexyl)methane isophthalamide

(polyamide MACMI), polybis(3-methyl-4-aminocyclohexyl)methane dodecamide (polyamide MACM12), polybis(4-aminocyclohexyl)methane terephthalamide (polyamide PACMT), polybis(4-aminocyclohexyl)methane isophthalamide (polyamide PACMI), and polybis(4-aminocyclohexyl)methane dodecamide (polyamide PACM12).

Polyamide 6, polyamide 66, polyamide 56, polyamide 410, polyamide 510, polyamide 610, polyamide 6/66, polyamide 6/12, polyamide 9T, and polyamide 10T terminated with the structure represented by the above general formula (I) are employed in the present invention.

The terminal modified polyamide resin of the present invention is required to have a relative viscosity (ηr), as measured at 25°C in a 98% sulfuric acid solution at a resin concentration of 0.01 g/ml, of 2.1 to 10. A ηr of 2.1 or more improves toughness. The ηr is preferably 2.2 or more, more preferably 2.3 or more. A ηr of 10 or less improves molding processability. The ηr is preferably 8.0 or less, more preferably 6.0 or less.

In the present invention, the ηr can be controlled to be in the above range, for example, using a method for producing a terminal modified polyamide resin described below by reacting raw materials, that is, an amino acid, a lactam, a dicarboxylic acid, a diamine, and a terminal modification agent described below with each other such that the ratio of the total amino content [$NH_2$] to the total carboxyl content [COOH] ([$NH_2$]/[COOH]) of these materials is in a preferred range described below.

The terminal modified polyamide resin of the present invention preferably has a weight average molecular weight (Mw), as determined by gel permeation chromatography (GPC), of 40,000 or more. An Mw of 40,000 or more improves mechanical characteristics. The Mw is more preferably 50,000 or more, particularly preferably 60,000 or more. The Mw is preferably 400,000 or less. An Mw of 400,000 or less reduces the lower melt viscosity, leading to improved molding processability. The Mw is more preferably 300,000 or less, particularly preferably 250,000 or less. The weight average molecular weight (Mw) in the present invention is determined by GPC at 30°C using a hexafluoroisopropanol as solvent (with 0.005 N sodium trifluoroacetate added) and two Shodex HFIP-806M columns and an HFIP-LG column. Polymethyl methacrylate was used as a molecular weight standard.

In the present invention, the Mw can be controlled to be in the above range, for example, using the method for producing a terminal modified polyamide resin described below by using raw materials, that is, an amino acid, a lactam, a dicarboxylic acid, a diamine, and a terminal modification agent described below such that the ratio of the total amino content [$NH_2$] to the total carboxyl content [COOH] ([$NH_2$]/[COOH]) is in the preferred range described below.

The terminal modified polyamide resin of the present invention preferably has a melt viscosity ratio, as defined by the following equation (IV), of 80% or less, more preferably 60% or less, particularly preferably 50% or less. The melt viscosity ratio is an indicator of the melt-viscosity-reducing effect due to terminal modification, and molding processability can be improved by controlling the melt viscosity ratio to be in the above range.

Melt viscosity ratio (%) = {(melt viscosity of terminal modified polyamide resin)/(melt viscosity of terminal unmodified polyamide resin having Mw equivalent to that of terminal modified polyamide resin)} × 100 (%) (IV)

The polyamide resin having an Mw equivalent to that of a terminal modified polyamide resin refers to a polyamide resin having an Mw that is 95% to 105% of the Mw of the terminal modified polyamide resin. The melt viscosity can be determined using a rheometer. A terminal modified polyamide resin or a terminal unmodified polyamide resin is dried in a vacuum desiccator at 80°C for at least 12 hours, weighed out to 0.5 g, and melted in a nitrogen atmosphere at a measurement temperature described below for 5 minutes. After that, the melt viscosity is measured using a 25-diameter parallel plate at a gap distance of 0.5 mm in the oscillatory mode at an amplitude of 1% and a frequency of 0.527 Hz. The melt viscosity varies depending on the measurement temperature, and thus in the present invention, the measurement is carried out at any temperature in the range from the melting point (Tm) of the terminal modified polyamide resin + 20°C to the Tm + 50°C.

In the present invention, the melt viscosity ratio can be controlled to be in the above range, for example, by having the terminal structure represented by the above general formula (I) in the above-described preferred range.

A description will now be given of a method for producing the terminal modified polyamide resin of the present invention. The terminal modified polyamide resin of the present invention can be produced, for example, by reacting raw materials of the polyamide resin with a terminal modification agent represented by the following general formula (II) during polymerization or melt-kneading a polyamide resin and a terminal modification agent. Examples of the method

of the reaction during polymerization include a method in which raw materials of the polyamide resin are mixed in advance with a terminal modification agent, and then the mixture is heated to undergo condensation and a method in which a terminal modification agent is bound by being added during polymerization of main raw materials.

$$Y\text{-}(R^1\text{-}O)_n\text{-}R^2 \qquad (II)$$

In the general formula (II), n ranges from 2 to 100. As in the case of n in the above general formula (I), n is preferably 5 or more, more preferably 8 or more, still more preferably 16 or more. On the other hand, n is preferably 70 or less, more preferably 50 or less. $R^1$ represents a divalent hydrocarbon group of 2 to 10 carbon atoms, and $R^2$ represents a monovalent hydrocarbon group of 1 to 30 carbon atoms. Examples of $R^1$ and $R^2$ respectively include the groups listed as examples of $R^1$ and $R^2$ in the general formula (I). Y- represents an amino group or an *N*-methylamino group. $NH_2$-, which is highly reactive with polyamide terminals, is more preferred.

The terminal modification agent represented by the above general formula (II) preferably has a number average molecular weight of 750 to 10,000. A number average molecular weight of 750 or more provides a lower melt viscosity. The number average molecular weight is more preferably 800 or more, still more preferably 900 or more. A number average molecular weight of 10,000 or less improves the affinity for the main structural unit of the polyamide resin. The number average molecular weight is more preferably 5,000 or less, more preferably 2,500 or less, most preferably 1,500 or less.

Specific examples of the terminal modification agent represented by the above general formula (II) include methoxy poly(ethylene glycol) amine, methoxy poly(trimethylene glycol) amine, methoxy poly(propylene glycol) amine, methoxy poly(tetramethylene glycol) amine, and methoxy poly(ethylene glycol) poly(propylene glycol) amine. When two polyalkylene glycols are contained, the resin may take a block polymer structure or a random copolymer structure. The above terminal modification agents may be used in a combination of two or more.

Examples of raw materials for providing a polyamide resin include the above-described raw materials for providing a polyamide resin, such as amino acids, lactams, and mixtures of a diamine and a dicarboxylic acid.

When the terminal modified polyamide resin is produced by reacting raw materials of the polyamide resin with a terminal modification agent during polymerization, a melt polymerization method, in which the reaction is effected at or higher than the melting point of the polyamide resin, or a solid phase polymerization method, in which the reaction is effected at lower than the melting point of the polyamide resin, may be used. By contrast, when the terminal modified polyamide resin is produced by melt-kneading a polyamide resin and a terminal modification agent, the reaction is preferably effected at a melt-kneading temperature 10°C to 40°C higher than the melting point (Tm) of the polyamide resin. When the melt-kneading is carried out using an extruder, for example, it is preferable to set the cylinder temperature of the extruder within this range. A melt-kneading temperature within this range allows the terminal modification agent to efficiently bind to terminals of the polyamide resin while preventing or reducing volatilization of the terminal modification agent and decomposition of the polyamide resin.

When the terminal modified polyamide resin is produced by reacting raw materials of the polyamide resin with a terminal modification agent during polymerization, a polymerization accelerator may optionally be added. Examples of preferred polymerization accelerators include inorganic phosphorus compounds such as phosphoric acid, phosphorous acid, hypophosphorous acid, pyrophosphoric acid, polyphosphoric acid, and alkali metal salts and alkaline earth metal salts thereof, and sodium phosphite and sodium hypophosphite are particularly suitable for use. The polymerization accelerator is preferably used in an amount of 0.001 to 1 part by mass based on 100 parts by mass of raw materials of the polyamide resin (excluding terminal modification agents). A polymerization accelerator added in an amount of 0.001 to 1 part by mass provides a terminal modified polyamide resin having a more excellent balance between mechanical characteristics and molding processability.

In the present invention, to control the $\eta r$ and the Mw of the terminal modified polyamide resin to be in the preferred ranges described above, it is preferable to use raw materials, that is, an amino acid, a lactam, a dicarboxylic acid, a diamine, and a terminal modification agent such that the ratio of the total amino content $[NH_2]$ to the total carboxyl content [COOH] ($[NH_2]$/[COOH]) of these raw materials is 0.95 to 1.05. $[NH_2]$/[COOH] is more preferably 0.98 to 1.02, still more preferably 0.99 to 1.01. In the case of a lactam, $[NH_2]$ and [COOH] respectively refer to the amount of amino group and the amount of carboxyl group that can be formed by hydrolyzing amide groups.

To the terminal modified polyamide resin of the present invention, fillers, different polymers, and various additives can be added to provide a polyamide resin composition comprising the terminal modified polyamide resin.

Any fillers commonly used as fillers for resins can be used, and a molded article made of the polyamide resin composition can be provided with improved strength, rigidity, heat resistance, and dimensional stability. Examples of fillers include fibrous inorganic fillers such as glass fibers, carbon fibers, potassium titanate whiskers, zinc oxide whiskers, aluminum borate whiskers, aramid fibers, alumina fibers, silicon carbide fibers, ceramic fibers, asbestos fibers, gypsum fibers, and metal fibers. Other examples include non-fibrous inorganic fillers such as wollastonite, zeolite, sericite, kaolin, mica, talc, clay, pyrophyllite, bentonite, montmorillonite, asbestos, aluminosilicate, alumina, silicon oxide, magnesium

oxide, zirconium oxide, titanium oxide, iron oxide, calcium carbonate, magnesium carbonate, dolomite, calcium sulfate, barium sulfate, magnesium hydroxide, calcium hydroxide, aluminum hydroxide, glass beads, ceramic beads, boron nitride, silicon carbide, and silica. Two or more of them may be added. These fillers may be hollow. The fillers may be treated with a coupling agent such as an isocyanate compound, an organic silane compound, an organic titanate compound, an organic borane compound, or an epoxy compound. Organic montmorillonite, which is obtained by cation-exchanging interlayer ions of montmorillonite with organic ammonium salts, may be used. Of these fillers, fibrous inorganic fillers are preferred, and glass fibers and carbon fibers are more preferred.

Examples of different polymers include polyolefins such as polyethylene and polypropylene, elastomers such as polyamide elastomers and polyester elastomers, polyester, polycarbonate, polyphenylene ether, polyphenylene sulfide, liquid crystal polymer, polysulfone, polyethersulfone, ABS resin, SAN resin, and polystyrene. Two or more of them may be added. To improve the impact strength of a molded article made of the polyamide resin composition, it is preferable to use impact strength modifiers, such as polyamide elastomers, polyester elastomers, and modified polyolefins such as (co)polymers obtained by polymerizing an olefin compound and/or a conjugated diene compound. Two or more of them may be added.

Examples of the (co)polymers include ethylene copolymers, conjugated diene polymers, and conjugated diene-aromatic vinyl hydrocarbon copolymers.

The ethylene copolymer refers to a copolymer of ethylene and any other monomer. Examples of the other monomer to be copolymerized with ethylene include α-olefins of 3 or more carbon atoms, unconjugated dienes, vinyl acetate, vinyl alcohol, α,β-unsaturated carboxylic acids, and derivatives thereof. Two or more of them may be copolymerized.

Examples of α-olefins of 3 or more carbon atoms include propylene, butene-1, pentene-1, 3-methylpentene-1, and octacene-1, among which propylene and butene-1 are preferred. Examples of unconjugated dienes include norbornene compounds, such as 5-methylidene-2-norbornene, 5-ethylidene-2-norbornene, 5-vinyl-2-norbornene, 5-propenyl-2-norbornene, 5-isopropenyl-2-norbornene, 5-crotyl-2-norbornene, 5-(2-methyl-2-butenyl)-2-norbornene, 5-(2-ethyl-2-butenyl)-2-norbornene, and 5-methyl-5-vinylnorbornene, dicyclopentadiene, methyltetrahydroindene, 4,7,8,9-tetrahydroindene, 1,5-cyclooctadiene, 1,4-hexadiene, isoprene, 6-methyl-1,5-heptadiene, and 11-tridecadiene, among which 5-methylidene-2-norbornene, 5-ethylidene-2-norbornene, dicyclopentadiene, and 1,4-hexadiene are preferred. Examples of α,β-unsaturated carboxylic acids include acrylic acid, methacrylic acid, ethacrylic acid, crotonic acid, maleic acid, fumaric acid, itaconic acid, citraconic acid, and butenedicarboxylic acid. Examples of derivatives of a,β-unsaturated carboxylic acids include alkyl esters, aryl esters, glycidyl esters, acid anhydrides, and imides of these α,β-unsaturated carboxylic acids.

The conjugated diene polymer refers to a polymer obtained by polymerizing at least one conjugated diene. Examples of conjugated dienes include 1,3-butadiene, isoprene (2-methyl-1,3-butadiene), 2,3-dimethyl-1,3-butadiene, and 1,3-pentadiene. Two or more of them may be copolymerized. Some or all of the unsaturated bonds of these polymers may be reduced through hydrogenation.

The conjugated diene-aromatic vinyl hydrocarbon copolymer refers to a copolymer of a conjugated diene and an aromatic vinyl hydrocarbon and may be a block copolymer or a random copolymer. Examples of conjugated dienes include those previously listed as raw materials of a conjugated diene polymer, and 1,3-butadiene and isoprene are preferred. Examples of aromatic vinyl hydrocarbons include styrene, α-methylstyrene, *o*-methylstyrene, *p*-methylstyrene, 1,3-dimethylstyrene, and vinylnaphthalene, among which styrene is preferred. Some or all of the unsaturated bonds, excluding double bonds in aromatic rings, of the conjugated diene-aromatic vinyl hydrocarbon copolymer may be reduced through hydrogenation.

Specific examples of other impact strength modifiers include ethylene/propylene copolymers, ethylene/butene-1 copolymers, ethylene/hexene-1 copolymers, ethylene/propylene/dicyclopentadiene copolymers, ethylene/propylene/5-ethylidene-2-norbornene copolymers, unhydrogenated or hydrogenated styrene/isoprene/styrene triblock copolymers, unhydrogenated or hydrogenated styrene/butadiene/styrene triblock copolymers, and ethylene/methacrylic acid copolymers, and derivatives of these copolymers in which some or all of the carboxylic acid moieties are salified with sodium, lithium, potassium, zinc, or calcium; ethylene/methyl acrylate copolymers, ethylene/ethyl acrylate copolymers, ethylene/methyl methacrylate copolymers, ethylene/ethyl methacrylate copolymers, ethylene/ethyl acrylate-g-maleic anhydride copolymers, (hereinafter "g" represents graft), ethylene/methyl methacrylate-g-maleic anhydride copolymers, ethylene/ethyl acrylate-g-maleimide copolymers, ethylene/ethyl acrylate-g-*N*-phenylmaleimide copolymers, and partially saponified products of these copolymers; and ethylene/glycidyl methacrylate copolymers, ethylene/vinyl acetate/glycidyl methacrylate copolymers, ethylene/methyl methacrylate/glycidyl methacrylate copolymers, ethylene/glycidyl acrylate copolymers, ethylene/vinyl acetate/glycidyl acrylate copolymers, ethylene/glycidyl ether copolymers, ethylene/propylene-g-maleic anhydride copolymers, ethylene/butene-1-g-maleic anhydride copolymers, ethylene/propylene/1,4-hexadiene-g-maleic anhydride copolymers, ethylene/propylene/dicyclopentadiene-g-maleic anhydride copolymers, ethylene/propylene/2,5-norbornadiene-g-maleic anhydride copolymers, ethylene/propylene-g-*N*-phenylmaleimide copolymers, ethylene/butene-1-g-*N*-phenylmaleimide copolymers, hydrogenated styrene/butadiene/styrene-g-maleic anhydride copolymers, hydrogenated styrene/isoprene/styrene-g-maleic anhydride copolymers, ethylene/propylene-g-glycidyl methacrylate copolymers, ethylene/butene-1-g-glycidyl methacrylate copolymers, ethylene/propylene/1,4-hexadiene-g-glycidyl methacrylate copolymers, ethylene/propylene/dicyclopentadiene-g-glycidyl methacrylate copolymers, hydrogenated styrene/butadiene/styrene-g-glycidyl methacrylate copolymers, nylon 12/polytetramethylene glycol copolymers, nylon 12/polytrimethylene glycol copolymers, polybutylene terephthalate/polytetramethylene glycol copolymers, and polybutylene terephthalate/polytrimethylene glycol copolymers. Of these, ethylene/methacrylic acid copolymers and derivatives of these copolymers in which some or all of the carboxylic acid moieties are salified with sodium, lithium, potassium, zinc, or calcium, ethylene/propylene-g-maleic anhydride copolymers, and ethylene/butene-1-g-maleic anhydride copolymers are more preferred.

Examples of various additives include antioxidants and heat stabilizers (e.g., hindered phenol compounds, hydroquinone compounds, phosphite compounds, substitution products thereof, copper halides, and iodine compounds), weathering agents (e.g., resorcinol compounds, salicylate compounds, benzotriazole compounds, benzophenone compounds, and hindered amine compounds), release agents and lubricants (e.g., aliphatic alcohols, aliphatic amides, aliphatic bisamides, bisurea, and polyethylene wax), pigments (e.g., cadmium sulfide, phthalocyanine, and carbon black), dyes (e.g., nigrosine and aniline black), plasticizers (e.g., octyl *p*-oxybenzoate and *N*-butyl benzenesulfonamide), antistatic agents (e.g., alkyl sulfate anionic antistatic agents, quarternary ammonium salt cationic antistatic agents, nonionic antistatic agents such as polyoxyethylene sorbitan monostearate, and betaine amphoteric antistatic agents), and flame retardants (e.g., melamine cyanurate; hydroxides such as magnesium hydroxide and aluminum hydroxide; ammonium polyphosphate; and brominated polystyrene, brominated polyphenylene oxide, brominated polycarbonate, brominated epoxy resins, and combinations of these brominated flame retardants with antimony trioxide). Two or more of them may be added.

The terminal modified polyamide resin of the present invention and the polyamide resin composition comprising the resin can be molded into a desired shape by any melt molding method such as injection molding, extrusion molding, blow molding, vacuum molding, melt spinning, or film forming. The molded article made of the terminal modified polyamide resin and the polyamide resin composition comprising the resin can be used, for example, as resin molded articles for electrical and electronic equipment components, automotive parts, and machine parts; fibers for clothing and industrial materials; and films for packaging and magnetic recording.

## Examples

The present invention will now be described in more detail with reference to examples, but these examples are not intended to limit the present invention. Property evaluations of Examples and Comparative Examples were carried out according to the following methods.

### Relative Viscosity (ηr)

The relative viscosities of solutions of terminal modified polyamide resins or polyamide resins obtained in Examples and Comparative Examples in 98% sulfuric acid at a resin concentration of 0.01 g/ml were measured at 25°C using an Ostwald viscometer.

### Amount of Amino Terminal Group

Terminal modified polyamide resins or polyamide resins obtained in Examples and Comparative Examples were each accurately weighed to 0.5 g and dissolved in 25 ml of a phenol/ethanol mixed solution (at a mass ratio of 83.5/16.5) at room temperature. Using thymol blue as an indicator, the resulting solution was then titrated with 0.02 N hydrochloric acid to determine the amount of amino terminal group (mmol/g).

### Amount of Carboxyl Terminal Group

Terminal modified polyamide resins or polyamide resins obtained in Examples and Comparative Examples were each accurately weighed to 0.5 g and dissolved in 20 ml of benzyl alcohol at 195°C. Using phenolphthalein as an indicator, the resulting solution was then titrated with a solution of 0.02 N potassium hydroxide in ethanol to determine the amount of carboxyl terminal group (mmol/g).

### Terminal Structure Content

Terminal modified polyamide resins obtained in Examples and Comparative Examples were each subjected to $^1$H-NMR measurement using an FT-NMR JNM-AL400 available from JEOL Ltd. Using deuterated sulfuric acid as a

solvent for measurement, a solution at a sample concentration of 50 mg/mL was prepared. The $^1$H-NMR measurement of the terminal modified polyamide resin was carried out with cumulative number 256 times. A peak attributed to the $R^2$ moiety of the structure represented by the above general formula (I) and a peak attributed to the repeating structural unit of the polyamide resin backbone were identified.

Integrated intensities of the peaks were calculated. From the integrated intensities and the number of hydrogen atoms in each structural unit, the amount Rc (mmol/g) of the structure represented by the above general formula (I) in the polyamide resin was calculated.

Furthermore, from the carboxyl terminal group concentration [COOH] and the amino terminal group concentration [$NH_2$] of the terminal modified polyamide resin, and the Rc, determined by the above methods, the rate of terminal structure Rt represented by the general formula (I) at terminals of the terminal modified polyamide resin was calculated according to the following equation (V):

$$Rt\ (mol\%) = Rc \times 100/([COOH] + [NH_2] + Rc) \qquad (V).$$

Thermal Characteristics

Using a differential scanning calorimeter (DSC Q20) available from TA Instruments, terminal modified polyamide resins or polyamide resins obtained in Examples and Comparative Examples were each weighed to 5 to 7 mg and heated in a nitrogen atmosphere from 20°C at a heating rate of 20°C/min. In Examples 1 to 7 and 11 and Comparative Examples 1 to 9 and 16 to 18, the resin was heated to 290°C. In Examples 8 and 9 and Comparative Examples 10 to 14, the resin was heated to 255°C. In Example 10 and Comparative Example 15, the resin was heated to 350°C. After completion of heating, the resin was cooled to 20°C at a rate of 20°C/min. The apex of an exothermic peak of the polyamide resin during this process was defined as Tc (cold crystallization temperature), and the area of the exothermic peak as ΔHc (cold crystallization enthalpy). The resin was then heated from 20°C at a rate of 20°C/min. In Examples 1 to 7 and 11 and Comparative Examples 1 to 9 and 16 to 18, the resin was heated to 290°C. In Example 8 and 9 and Comparative Examples 10 to 14, the resin was heated to 255°C. In Example 10 and Comparative Example 15, the resin was heated to 350°C. The apex of an endothermic peak that appeared during the heating was defined as Tm (melting point), and the area of the endothermic peak as ΔHm (crystal melting enthalpy).

Molecular Weight

Terminal modified polyamide resins or polyamide resins obtained in Examples and Comparative Examples in an amount of 2.5 mg were each dissolved in 4 ml of hexafluoroisopropanol (with 0.005 N sodium trifluoroacetate added), and the resulting solution was filtered through a 0.45 μm filter. Using the resulting solution, a number average molecular weight (Mn) and a weight average molecular weight (Mw) were determined by GPC. The measurement conditions were as follows:

Pump: e-Alliance GPC system (Waters)
Detector: Waters 2414 differential refractometer (Waters)
Column: Shodex HFIP-806M (two columns) + HFIP-LG
Solvent: hexafluoroisopropanol (with 0.005 N sodium trifluoroacetate added)
Flow rate: 1 ml/min
Sample injection volume: 0.1 ml
Temperature: 30°C
Molecular weight standard: polymethyl methacrylate

Melt Viscosity

Terminal modified polyamide resins or polyamide resins obtained in Examples and Comparative Examples were each dried in a vacuum desiccator at 80°C for at least 12 hours. A rheometer (MCR501 available from AntonPaar; plate, 25-diameter parallel plate) was used as a melt viscosity meter. A sample in an amount of 0.5 g was melted in a nitrogen atmosphere for 5 minutes, and then its melt viscosity was measured at a gap distance of 0.5 mm in the oscillatory mode at an amplitude of 1% and a frequency of 0.527 Hz. The melting temperatures were as follows:

Examples 1 to 7 and 11 and Comparative Examples 1 to 9 and 16 to 18: 290°C
Examples 8 and 9 and Comparative Examples 10 to 14: 260°C

Example 10 and Comparative Example 15: 335°C

The melt viscosity ratio was calculated by the following equation (VI):

$$\text{Melt viscosity ratio (\%)} = \{(\text{melt viscosity of terminal modified polyamide resin})/(\text{melt viscosity of terminal unmodified polyamide resin having Mw equivalent to that of terminal modified polyamide resin})\} \times 100 \quad \text{(VI)}.$$

Rate of Water Saturation

Terminal modified polyamide resins or polyamide resins obtained in Example 11 and Comparative Examples 16 to 18 were each dried in a vacuum desiccator at 80°C for at least 12 hours and then pressed at 280°C to prepare a film having a thickness of about 150 μm. The film was immersed in ion-exchanged water and allowed to stand at room temperature until the film was saturated with water to a constant mass. The film saturated with water was vacuum dried at 80°C for 24 hours, and then the mass of the film was measured. A rate of water saturation was calculated by the following equation (VII):

$$\text{Water saturation (\%)} = (\text{mass of film saturated with water} - \text{mass of film that has been vacuum dried}) \times 100/\text{mass of film that has been vacuum dried} \quad \text{(VII)}$$

Tensile Strength and Tensile Elongation

ASTM Type 1 dumbbell specimens obtained in Example 11 and Comparative Examples 16 to 18 were each placed in a TENSILON (registered trademark) UTA-2.5T (ORIENTEC Co., LTD.), and a tensile test was performed in accordance with ASTM-D638 in an atmosphere at 23°C and a humidity of 50% under the conditions of a gauge length of 114 mm and a strain rate of 10 mm/min to determine the tensile strength and the tensile elongation.

Raw Materials

Raw materials used in Examples and Comparative Examples are as follows:

Hexamethylenediamine: a product of TOKYO CHEMICAL INDUSTRY Co., LTD.
1,10-Decanediamine: a product of TOKYO CHEMICAL INDUSTRY Co., LTD.
Adipic acid: Wako special grade available from Wako Pure Chemical Industries, Ltd.
Terephthalic acid: a product of Mitsui Chemicals, Inc.
ε-caprolactam: Wako special grade available from Wako Pure Chemical Industries, Ltd.

Methoxy poly(ethylene glycol) poly(propylene glycol) amine represented by the following structural formula, serving as a terminal modification agent:
JEFFAMINE (registered trademark) M1000 available from HUNTSMAN (number average molecular weight Mn: 1,000)

[Chemical formula 1]

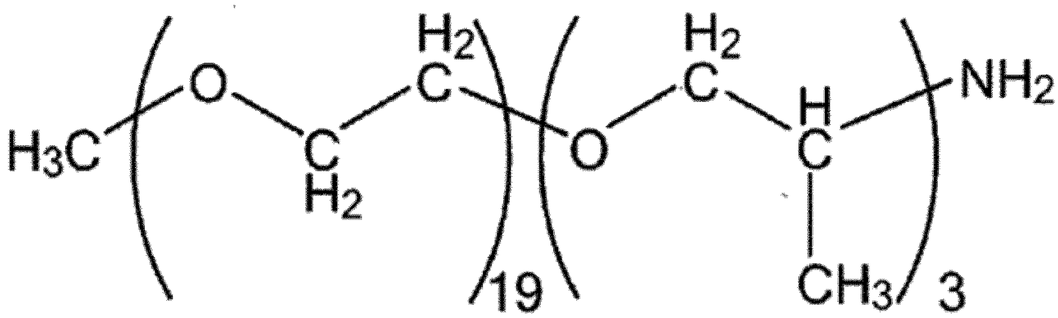

Methoxy ethylene glycol poly(propylene glycol) amine represented by the following structural formula, serving as a terminal modification agent: JEFFAMINE (registered trademark) M600 available from HUNTSMAN (number average molecular weight Mn: 600)

[Chemical formula 2]

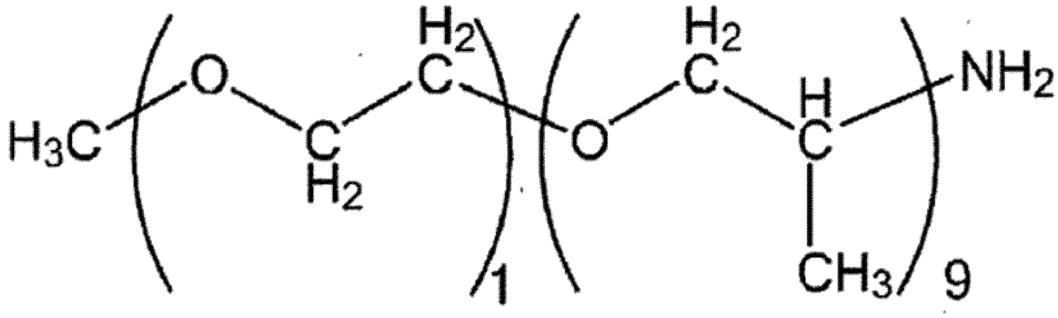

Methoxy poly(ethylene glycol) poly(propylene glycol) amine represented by the following structural formula, serving as a terminal modification agent: JEFFAMINE (registered trademark) M2070 available from HUNTSMAN (number average molecular weight Mn: 2,000)

[Chemical formula 3]

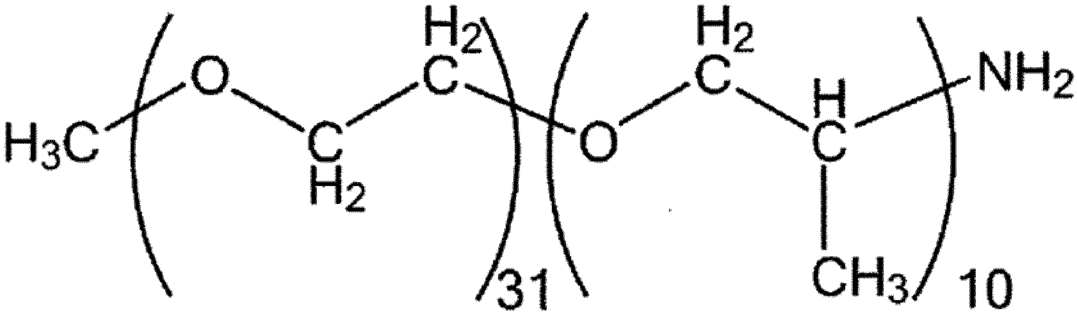

Poly(ethylene glycol) bis(amine): a product of Aldrich; Mw, 2000 Methoxypolyethylene glycol amine represented by the following structural formula: a product of Fluka (number average molecular weight Mn: 750)

[Chemical formula 4]

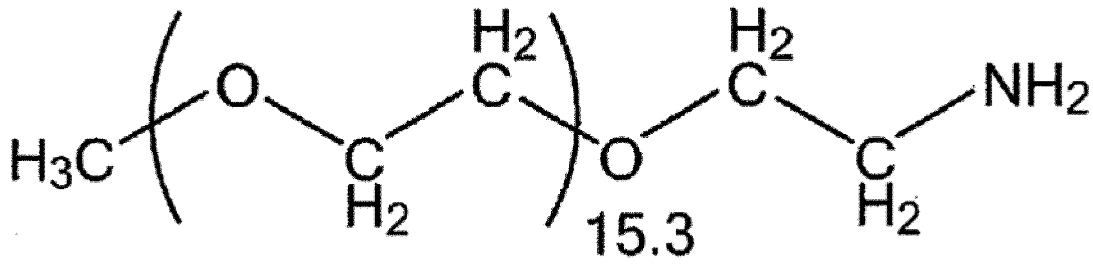

Stearylamine: a product of TOKYO CHEMICAL INDUSTRY Co., LTD. Poly(ethylene glycol) monomethyl ether: a product of Aldrich (number average molecular weight Mn: 750)

Example 1

In a reaction vessel were placed 3.54 g of hexamethylenediamine, 4.46 g of adipic acid, 8 g of ion-exchanged water, and 0.152 g of JEFFAMINE M1000, and the vessel was hermetically sealed and purged with nitrogen. Heating was started with the temperature of a heater on the periphery of the reaction vessel set to 290°C. After the pressure in the vessel reached 1.75 MPa, the pressure in the vessel was held constant (1.75 MPa) while water was discharged from the system. After the temperature in the vessel reached 240°C, the pressure in the vessel was returned to atmospheric pressure over one hour while water was discharged from the system. The temperature in the vessel was raised until the pressure returned to atmospheric pressure such that the temperature in the vessel was 260°C when the pressure reached atmospheric pressure. The pressure in the vessel was then held for 90 minutes under a stream of nitrogen and heated to 275°C to obtain a terminal modified polyamide 66 resin. The terminal modified polyamide 66 resin was Soxhlet extracted with methyl alcohol to remove the terminal modification agent remained unreacted. The terminal modified polyamide 66 resin thus obtained had a relative viscosity of 2.89 and a melt viscosity of 280 Pa·s. Other physical properties are shown in Table 1.

Examples 2 and 3 and Comparative Examples 1 to 3

A polyamide 66 resin and a terminal modified polyamide 66 resin were obtained in the same manner as in Example 1 except that the composition of the raw materials was changed as shown in Table 1, and the time period during which the pressure in the vessel was held under a stream of nitrogen after returned to atmospheric pressure was changed as shown in Table 1. The physical properties of the polyamide 66 resin and the terminal modified polyamide 66 resin are shown in Table 1.

Table 1

Table 1

| | | | | Example 1 | Example 2 | Example 3 | Comparative 1 | Comparative Example 2 | Comparative Example 3 |
|---|---|---|---|---|---|---|---|---|---|
| Raw materials | | Hexamethylenediamine | g | 3.54 | 3.54 | 3.54 | 3.54 | 3.54 | 3.54 |
| | | Adipic acid | g | 4.46 | 4.46 | 4.46 | 4.46 | 4.46 | 4.46 |
| | | "JEFFAMINE" M1000 | g | 0.152 | 0.152 | 0.152 | - | - | - |
| | | Ion-exchanged water | g | 8 | 8 | 8 | 8 | 8 | 8 |
| Time per riod during which nitrogen after pressure in vessel is held under stream of returned to atmospheric pressure | | | min | 90 | 0 | 150 | 60 | 0 | 100 |
| Physical properties of polymer | Basic physical properties | ηr | - | 2.89 | 2.10 | 3.95 | 3.18 | 2.20 | 4.15 |
| | | [COOH] | mmol/g | 0.060 | 0.070 | 0.048 | 0.074 | 0.095 | 0.050 |
| | | [$NH_2$] | mmol/g | 0.045 | 0.083 | 0.023 | 0.046 | 0.085 | 0.039 |
| | | Amount of terminal structure introduced (Rc) | mmol/g | 0.020 | 0.020 | 0.020 | - | - | - |
| | | Amount of terminal structure introduced | mass% | 2.0 | 2.0 | 2.0 | - | - | - |
| | | Rate of terminal structure introduced (Rt) | mol% | 16 | 12 | 22 | - | - | - |
| | Thermal characteristics | Tc | °C | 227 | 228 | 227 | 217 | 217 | 216 |
| | | ΔHc | J/g | 61 | 64 | 63 | 63 | 62 | 64 |
| | | Tm | °C | 259 | 257 | 259 | 260 | 260 | 260 |
| | | ΔHm | J/g | 73 | 78 | 75 | 73 | 73 | 71 |
| | | Tm-Tc | °C | 32 | 29 | 32 | 43 | 43 | 44 |

(continued)

| | | | | Example 1 | Example 2 | Example 3 | Comparative 1 | Comparative Example 2 | Comparative Example 3 |
|---|---|---|---|---|---|---|---|---|---|
| | Molecular weight | Number average molecular weight (Mn) | - | 23100 | 14400 | 26500 | 20600 | 14000 | 26000 |
| | | Weight average molecular weight (Mw) | - | 74200 | 34300 | 99400 | 72300 | 34600 | 98500 |
| | | Mw/Mn | - | 3.21 | 2.38 | 3.75 | 3.51 | 2.47 | 3.79 |
| | Melt viscosity | | Pa·s | 280 | 30 | 480 | 788 | 68 | 1530 |
| | Melt viscosity ratio | | % | 36 | 44 | 31 | - | - | - |

Comparison of Examples 1 to 3 with Comparative Examples 1 to 3 shows that the terminal modified polyamide 66 resins have lower melt viscosities than the polyamide 66 resins having comparable weight average molecular weights. For the terminal modified polyamide resins, which have the same terminal structure content, the viscosity-reducing effect increases with increasing weight average molecular weight.

Example 4 and Comparative Examples 4 to 6

A polyamide 66 resin and a terminal modified polyamide 66 resin were obtained in the same manner as in Example 1 except that the composition of the raw materials was changed as shown in Table 2, and the time period during which the pressure in the vessel was held under a stream of nitrogen after returned to atmospheric pressure was changed as shown in Table 2. The physical properties of the polyamide 66 resin and the terminal modified polyamide 66 resin are shown in Table 2.

Table 2

Table 2

| | | | | Example 1 | Example 4 | Comparative Example 4 | Comparative Example 1 | Comparative Example 5 | Comparative Example 6 |
|---|---|---|---|---|---|---|---|---|---|
| Raw materials | | Hexamethylenediamine | g | 3.54 | 3.54 | 3.54 | 3.54 | 3.54 | 3.54 |
| | | Adipic acid | g | 4.46 | 4.46 | 4.46 | 4.46 | 4.46 | 4.46 |
| | | "JEFFAMINE" M1000 | g | 0.152 | 0.340 | 0.400 | - | - | - |
| | | Ion-exchanged water | g | 8 | 8 | 8 | 8 | 8 | 8 |
| Time peri iod during which nitrogen after r pressure in vessel is held under stream of eturned to atmospheric pressure | | | min | 90 | 120 | 120 | 60 | 45 | 0 |
| Physical properties of polymer | Basic physical properties | ηr | - | 2.89 | 2.40 | 1.95 | 3.18 | 2.96 | 2.10 |
| | | [COOH] | mmol/g | 0.060 | 0.078 | 0.168 | 0.074 | 0.085 | 0.130 |
| | | $[NH_2]$ | mmol/g | 0.045 | 0.021 | 0.018 | 0.046 | 0.055 | 0.112 |
| | | Amount of terminal structure introduced (Rc) | mmol/g | 0.020 | 0.043 | 0.052 | - | - | - |
| | | Amount of terminal structure introduced | mass% | 2.0 | 4.3 | 5.2 | - | - | - |
| | | Rate of terminal structure introduced (Rt) | mol% | 16 | 30 | 22 | - | - | - |
| | Thermal characteristics | Tc | °C | 227 | 227 | 227 | 217 | 217 | 219 |
| | | ΔHc | J/g | 61 | 61 | 61 | 63 | 63 | 61 |
| | | Tm | °C | 259 | 257 | 256 | 260 | 260 | 256 |
| | | ΔHm | J/g | 73 | 74 | 74 | 73 | 74 | 74 |
| | | Tm-Tc | °C | 32 | 30 | 29 | 43 | 43 | 37 |

(continued)

| | | | Example 1 | Example 4 | Comparative Example 4 | Comparative Example 1 | Comparative Example 5 | Comparative Example 6 |
|---|---|---|---|---|---|---|---|---|
| Molecular weight | Number average molecular weight (Mn) | - | 23100 | 20600 | 13500 | 20600 | 19600 | 13400 |
| | Weight average molecular weight (Mw) | - | 74200 | 63000 | 31300 | 72300 | 62800 | 31600 |
| | Mw/Mn | - | 3.21 | 3.06 | 2.32 | 3.51 | 3.20 | 2.36 |
| Melt viscosity | | Pa·s | 280 | 88 | 21 | 788 | 381 | 51 |
| Melt viscosity ratio | | % | 36 | 23 | 41 | - | - | - |

Comparison of Examples 1 and 4 with Comparative Example 4 shows that the increase in terminal structure content reduces the relative viscosity and the molecular weight of terminal modified polyamide 66, that is, makes it difficult to produce a polyamide resin having a high molecular weight.

Examples 5 and 6 and Comparative Examples 7 and 8

A polyamide 66 resin, a terminal modified polyamide 66 resin, and a copolyamide 66 resin were obtained in the same manner as in Example 1 except that the composition of the raw materials was changed as shown in Table 3, and the time period during which the pressure in the vessel was held under a stream of nitrogen after returned to atmospheric pressure was changed as shown in Table 3. The physical properties of the polyamide 66 resin, the terminal modified polyamide 66 resin, and the copolyamide 66 resin are shown in Table 3.

Table 3

Table 3

| | | | Example 1 | Example 5 | Example 6 | Comparative Example 1 | Comparative Example 7 | Comparative Example 8 |
|---|---|---|---|---|---|---|---|---|
| Raw materials | Hexamethylenediamine | g | 3.54 | 3.54 | 3.54 | 3.54 | 3.54 | 3.54 |
| | Adipic acid | g | 4.46 | 4.46 | 4.46 | 4.46 | 4.46 | 4.46 |
| | "JEFFAMINE" M1000 | g | 0.152 | - | - | - | - | - |
| | "JEFFAMINE" M600 | g | - | 0.152 | - | - | - | - |
| | "JEFFAMINE" M2070 | g | - | - | 0.152 | - | - | - |
| | Poly(ethylene glycol) bis (amine) | g | - | - | - | - | 0.304 | - |
| | Poly(ethylene glycol) monomethyl ether | g | - | - | - | - | - | 0.152 |
| | Ion-exchanged water | g | 8 | 8 | 8 | 8 | 8 | 8 |
| Time period during which pressure in vessel is held under stream of nitrogen after returned to atmospheric pressure | | min | 90 | 75 | 75 | 60 | 60 | 60 |

(continued)

| | | | | Example 1 | Example 5 | Example 6 | Comparative Example 1 | Comparative Example 7 | Comparative Example 8 |
|---|---|---|---|---|---|---|---|---|---|
| Physical properties of polymer | Basic physical properties | ηr | - | 2.89 | 3.01 | 2.93 | 3.18 | 2.92 | 2.92 |
| | | [COOH] | mmol/g | 0.060 | 0.083 | 0.074 | 0.074 | 0.065 | 0.065 |
| | | $[NH_2]$ | mmol/g | 0.045 | 0.032 | 0.042 | 0.046 | 0.052 | 0.052 |
| | | Amount of terminal structure introduced (Rc) | mmol/g | 0.020 | 0.007 | 0.008 | - | - | 0.005 |
| | | Amount of terminal structure introduced | mass% | 2.0 | 0.4 | 1.6 | - | - | 0.4 |
| | | Rate of terminal structure introduced (Rt) | mol% | 16 | 6 | 6 | - | - | 4 |
| | Thermal characteristics | Tc | °C | 227 | 228 | 227 | 217 | 216 | 227 |
| | | ΔHc | J/g | 61 | 64 | 62 | 63 | 63 | 64 |
| | | Tm | °C | 259 | 259 | 259 | 260 | 259 | 259 |
| | | ΔHm | J/g | 73 | 72 | 72 | 73 | 72 | 71 |
| | | Tm-Tc | °C | 32 | 31 | 32 | 43 | 43 | 32 |
| | Molecular weight | Number average molecular weight (Mn) | - | 23100 | 21200 | 21600 | 20600 | 21200 | 21000 |
| | | Weight average molecular weight (Mw) | - | 74200 | 72400 | 73300 | 72300 | 73300 | 72200 |
| | | Mw/Mn | - | 3.21 | 3.42 | 3.39 | 3.51 | 3.46 | 3.44 |
| | Melt viscosity | | Pa·s | 280 | 614 | 482 | 788 | 510 | 743 |
| | Melt viscosity ratio | | % | 36 | 78 | 61 | - | 65 | 94 |

Comparison of Examples 1, 5, and 6 with Comparative Example 8 shows that the use of a specific terminal modification agent represented by the above general formula (II) as a raw material provides a polyamide resin with a significant melt-viscosity-reducing effect. Comparison of Example 1 with Examples 5 and 6 shows that in the specific terminal modification agent represented by the above general formula (II) used as a raw material, $R^1$ preferably contains at least 10 ethylene groups and more preferably contains 6 or less isopropylene groups. $R^1$ containing these groups within these ranges allows the structure represented by the general formula (I) to be more quantitatively introduced into terminals of the polyamide resin, leading to an improved melt-viscosity-reducing effect. Comparison of Example 1 with Comparative Example 7 shows that the terminal modified polyamide 66 resin having a specific terminal structure represented by the above general formula (I) has a high melt-viscosity-reducing effect and a high Tc as compared to a polyamide 66 resin copolymerized with poly(ethylene glycol) bis(amine), which has bifunctionality.

Example 7

In a reaction vessel was placed 2 g of the terminal modified polyamide 66 resin obtained in Example 1, and the vessel was hermetically sealed and purged with nitrogen. The pressure in the reaction vessel was then reduced to about 15 Pa, and solid phase polymerization was carried out at 220°C for 7 hours to obtain a terminal modified polyamide 66 resin. The terminal modified polyamide 66 resin had a relative viscosity of 5.61 and a melt viscosity of 1,880 Pa·s. Other physical properties are shown in Table 4.

Comparative Example 9

In a reaction vessel was placed 2 g of the polyamide 66 resin obtained in Comparative Example 1, and the vessel was hermetically sealed and purged with nitrogen. The pressure in the reaction vessel was then reduced to about 15 Pa, and solid phase polymerization was carried out at 220°C for 2.5 hours to obtain a polyamide 66 resin. The polyamide 66 resin had a relative viscosity of 5.73 and a melt viscosity of 7,500 Pa·s. Other physical properties are shown in Table 4.

Table 4

Table 4

| | | | | Example 7 | Comparative Example 9 |
|---|---|---|---|---|---|
| Physical properties of polymer | Basic physical properties | $\eta r$ | - | 5.61 | 5.73 |
| | | [COOH] | mmol/g | 0.043 | 0.060 |
| | | $[NH_2]$ | mmol/g | 0.017 | 0.018 |
| | | Amount of terminal structure introduced (Rc) | mmol/g | 0.019 | - |
| | | Amount of terminal structure introduced | mass% | 1.9 | - |
| | | Rate of terminal structure introduced (Rt) | mol% | 24 | - |
| | Thermal characteristics | Tc | °C | 227 | 216 |
| | | $\Delta Hc$ | J/g | 61 | 65 |
| | | Tm | °C | 259 | 261 |
| | | $\Delta Hm$ | J/g | 71 | 71 |
| | | Tm-Tc | °C | 32 | 45 |

(continued)

| | | | | Example 7 | Comparative Example 9 |
|---|---|---|---|---|---|
| | Molecular weight | Number average molecular weight (Mn) | - | 22100 | 24000 |
| | | Weight average molecular weight (Mw) | - | 180000 | 173000 |
| | | Mw/Mn | - | 8.16 | 7.21 |
| | Melt viscosity | | Pa·s | 1880 | 7500 |
| | Melt viscosity ratio | | % | 25 | - |

Comparison of Example 7 with Comparative Example 9 shows that the terminal modified polyamide 66 resin terminated with the structure represented by the above general formula (I) has a high melt-viscosity-reducing effect despite the high molecular weight increased by solid phase polymerization.

Example 8

In a reaction vessel were placed 13 g of ε-caprolactam, 13 g of ion-exchanged water, and 0.57 g of JEFFAMINE M1000, and the vessel was hermetically sealed and purged with nitrogen. Heating was started with the temperature of a heater on the periphery of the reaction vessel set to 290°C. After the pressure in the vessel reached 1.0 MPa, the pressure in the vessel was held at 1.0 MPa while water was discharged from the system, and the heating was continued until the temperature in the vessel reached 240°C. After the temperature in the vessel reached 240°C, the temperature of the heater was reset to 270°C, and the pressure in the vessel was adjusted so as to return to atmospheric pressure over one hour (the temperature in the vessel when atmospheric pressure was reached: 243°C). The pressure in the vessel was then held under a stream of nitrogen for 300 minutes to obtain a terminal modified polyamide 6 resin (maximum temperature: 253°C). The terminal modified polyamide 6 resin was then Soxhlet extracted with methyl alcohol to remove the terminal modification agent remained unreacted. The terminal modified polyamide 6 resin thus obtained had a relative viscosity of 2.21 and a melt viscosity of 84 Pa·s. Other physical properties are shown in Table 5.

Example 9 and Comparative Examples 10 to 14

A terminal modified polyamide 6 resin and a polyamide 6 resin were obtained in the same manner as in Example 8 except that the composition of the raw materials was changed as shown in Table 5, and the time period during which the pressure in the vessel was held under a stream of nitrogen after returned to atmospheric pressure was changed as shown in Table 5. The physical properties of the terminal modified polyamide 6 resin and the polyamide 6 resin are shown in Table 5.

Table 5

Table 5

| | | | Example 8 | Example 9 | Comparative Example 10 | Comparative Example 11 | Comparative Example 12 | Comparative Example 13 | Comparative Example 14 |
|---|---|---|---|---|---|---|---|---|---|
| Raw materials | ε-caprolactam | g | 13 | 13 | 13 | 13 | 13 | 13 | 13 |
| | "JEFFAMINE" M1000 | g | 0.57 | - | - | 1.15 | - | - | - |
| | Methoxypolyethylene glycol amine | g | - | 0.57 | - | - | - | - | - |
| | Stearylamine | g | - | - | - | - | - | 0.15 | - |
| | Ion-exchanged water | g | 13 | 13 | 13 | 13 | 13 | 13 | 13 |
| Time period during which pressure in vessel is held under stream of nitrogen after returned to atmospheric pressure | | min | 300 | 300 | 120 | 300 | 30 | 180 | 150 |

(continued)

| | | | | Example 8 | Example 9 | Comparative Example 10 | Comparative Example 11 | Comparative Example 12 | Comparative Example 13 | Comparative Example 14 |
|---|---|---|---|---|---|---|---|---|---|---|
| Physical properties of polymer | Basic physical properties | ηr | - | 2.21 | 2.18 | 2.4 | 1.78 | 2.03 | 3.43 | 3.47 |
| | | [COOH] | mmol/g | 0.029 | 0.029 | 0.070 | 0.026 | 0.112 | 0.010 | 0.043 |
| | | $[NH_2]$ | mmol/g | 0.067 | 0.067 | 0.068 | 0.101 | 0.096 | 0.025 | 0.033 |
| | | Amount of terminal structure introduced (Rc) | mmol/g | 0.039 | 0.053 | - | 0.085 | - | 0.035 | - |
| | | Amount of terminal structure introduced | mass% | 3.9 | 4.0 | - | 8.5 | - | 0.9 | - |
| | | Rate of terminal structure introduced (Rt) | mol% | 29 | 36 | - | 40 | - | 50 | - |
| | Thermal characteristics | Tc | °C | 182 | 182 | 172 | 181 | 173 | 171 | 173 |
| | | ΔHc | J/g | 68 | 66 | 62 | 67 | 60 | 55 | 53 |
| | | Tm | °C | 218 | 218 | 219 | 219 | 219 | 218 | 219 |
| | | ΔHm | J/g | 58 | 55 | 60 | 58 | 59 | 62 | 60 |
| | | Tm-Tc | °C | 36 | 36 | 47 | 38 | 46 | 47 | 46 |
| | Molecular weight | Number average molecular weight (Mn) | - | 25000 | 25200 | 24600 | 17800 | 15900 | 13100 | 16600 |
| | | Weight average molecular weight (Mw) | - | 60100 | 60500 | 60600 | 35600 | 34100 | 71300 | 67300 |
| | | Mw/Mn | - | 2.40 | 2.40 | 2.46 | 2.00 | 2.14 | 5.44 | 4.05 |
| | Melt viscosity | | Pa·s | 84 | 131 | 417 | 7.6 | 44 | 766 | 840 |
| | Melt viscosity ratio | | % | 20 | 31 | - | 17 | - | 91 | - |

Comparison of Examples 8 and 9 with Comparative Examples 10 and 14 shows that the terminal modified polyamide 6 resins terminated with the structure represented by the above general formula (I) have a high melt-viscosity-reducing effect and a high Tc. Comparison of Example 8 with Comparative Example 11 shows that the increase in terminal structure content reduces the relative viscosity and the molecular weight of terminal modified polyamide 6. Comparative Example 13 shows that the terminal modified polyamide 6 terminated with a stearylamine residue has a small melt-viscosity-reducing effect.

Example 10

In a reaction vessel were placed 4.91 g of 1,10-decanediamine, 5.09 g of terephthalic acid, 10 g of ion-exchanged water, and 0.295 g of JEFFAMINE M1000, and the vessel was hermetically sealed and purged with nitrogen. Heating was started with the temperature of a heater on the periphery of the reaction vessel set to 310°C. After the pressure in the vessel reached 1.75 MPa, the pressure in the vessel was held at 1.75 MPa while water was discharged from the system, and the heating was continued until the temperature in the vessel reached 242°C. Immediately after the temperature in the vessel reached 242°C, the heater was turned off to cool the inside of the vessel, thereby obtaining a terminal modified polyamide 10T oligomer ($\eta r$ = 1.7). Subsequently, 3 g of the terminal modified polyamide 10T resin was placed in the reaction vessel, and the vessel was hermetically sealed and purged with nitrogen. The pressure in the reaction vessel was then reduced to about 90 Pa, and solid phase polymerization was carried out at 220°C for 2.5 hours to obtain a terminal modified polyamide 10T resin. The terminal modified polyamide 10T resin was further Soxhlet extracted with methyl alcohol to remove the terminal modification agent remained unreacted. The terminal modified polyamide 10T resin thus obtained had a relative viscosity of 2.30 and a melt viscosity of 1,130 Pa·s. Other physical properties are shown in Table 6.

Comparative Example 15

A polyamide 10T resin was obtained in the same manner as in Example 10 except that the composition of the raw materials was changed as shown in Table 6, and the solid phase polymerization was carried out for 2 hours. The polyamide 10T resin had a relative viscosity of 2.40 and a melt viscosity of 3,290 Pa·s. Other physical properties are shown in Table 6.

Table 6

Table 6

| | | | Example 10 | Comparative Example 15 |
|---|---|---|---|---|
| Raw materials | Terephthalic acid | g | 4.91 | 4.91 |
| | 1,10-Decanediamine | g | 5.09 | 5.09 |
| | "JEFFAMINE" M1000 | g | 0.295 | - |
| | Ion-exchanged water | g | 10 | 10 |

(continued)

| | | | | Example 10 | Comparative Example 15 |
|---|---|---|---|---|---|
| Physical properties of polymer | Basic physical properties | ηr | - | 2.3 | 2.4 |
| | | [COOH] | mmol/g | - | - |
| | | $[NH_2]$ | mmol/g | - | - |
| | | Amount of terminal structure introduced (Rc) | mmol/g | 0.030 | - |
| | | Amount of terminal structure introduced | mass% | 3.0 | - |
| | | Rate of terminal structure introduced (Rt) | mol% | - | - |
| | Thermal characteristics | Tc | °C | 283 | 283 |
| | | ΔHc | J/g | 42 | 49 |
| | | Tm | °C | 311 | 312 |
| | | ΔHm | J/g | 71 | 72 |
| | | Tm - Tc | °C | 28 | 29 |
| | Molecular weight | Number average molecular weight (Mn) | - | 10500 | 10300 |
| | | Weight average molecular weight (Mw) | - | 54700 | 54200 |
| | | Mw/Mn | - | 5.21 | 5.26 |
| | Melt viscosity | | Pa·s | 1130 | 3290 |
| | Melt viscosity ratio | | % | 34 | - |

Comparison of Example 10 with Comparative Example 15 shows that the terminal modified polyamide 10T resin terminated with the structure represented by the above general formula (I) has a high melt-viscosity-reducing effect.

Example 11

In a pressure vessel with a capacity of 3 L equipped with a stirring blade were placed 332 g of hexamethylenediamine, 418 g of adipic acid, 250 g of ion-exchanged water, and 14.3 g of JEFFAMINE M1000, and the vessel was purged with nitrogen. After that, the pressure in the vessel was increased to 0.05 MPa with nitrogen. With the pressure vessel hermetically sealed, heating was started with the temperature of the heater set to 280°C. After 65 minutes, the temperature in the vessel reached 220°C, and the pressure in the vessel 1.75 MPa. The pressure in the vessel was held at 1.75 MPa while water was distilled out. When the temperature in the vessel reached 240°C, depressurization was started, and the pressure in the vessel was returned to atmospheric pressure over 60 minutes while water was distilled out. At this time, the temperature in the vessel was 277°C. Subsequently, the contents were stirred under a nitrogen flow for 30 minutes and then discharged in the form of a gut through a discharge port at the bottom of the pressure vessel. The gut was pelletized to obtain a terminal modified nylon 66 resin. The terminal modified polyamide 66 resin was Soxhlet extracted with methyl alcohol to remove the terminal modification agent remained unreacted. The terminal modified polyamide 66 resin thus obtained had a relative viscosity of 2.56 and a melt viscosity of 60 Pa·s. Other physical properties are shown in Table 7. Subsequently, the terminal modified polyamide resin was vacuum dried at 80°C overnight and then injection molded using an injection moulder (SG75H-MIV) available from Sumitomo Heavy Industries, Ltd. under the conditions of a cylinder temperature of 275°C, a mold temperature of 80°C, and an injection pressure of a lower limit pressure + 0.98 MPa to prepare an ASTM Type 1 dumbbell specimen. The ASTM Type 1 dumbbell specimen had a tensile strength of 78 MPa and a tensile elongation of 27%.

Comparative Example 16

A polyamide 66 resin was obtained in the same manner as in Example 11 except that the composition of the raw materials was changed as shown in Table 7. The polyamide 66 resin had a relative viscosity of 2.73 and a melt viscosity of 154 Pa·s. Other physical properties are shown in Table 7. Subsequently, an ASTM Type 1 dumbbell specimen was melt molded in the same manner as in Example 11. The specimen had a tensile strength of 77 MPa and a tensile elongation of 27%.

Comparative Example 17

A polyamide 66 resin was obtained in the same manner as in Example 11 except that the composition of the raw materials was changed as shown in Table 7, and the stirring under a nitrogen flow after the pressure in the vessel was returned to atmospheric pressure was carried out for 0 minutes. The polyamide 66 resin had a relative viscosity of 2.03 and a melt viscosity of 54 Pa·s. Other physical properties are shown in Table 7. Subsequently, an ASTM Type 1 dumbbell specimen was melt molded in the same manner as in Example 11. The specimen had a tensile strength of 43 MPa and a tensile elongation of 2%.

Comparative Example 18

A terminal modified polyamide 66 resin was obtained in the same manner as in Example 11 except that the composition of the raw materials was changed as shown in Table 7, and the stirring under a nitrogen flow after the pressure in the vessel was returned to atmospheric pressure was carried out for 60 minutes. The terminal modified polyamide 66 resin had a relative viscosity of 1.96 and a melt viscosity of 25 Pa·s. Other physical properties are shown in Table 7. Subsequently, an ASTM Type 1 dumbbell specimen was melt molded in the same manner as in Example 11. The specimen had a tensile strength of 42 MPa and a tensile elongation of 2%.

Table 7

Table 7

| | | | Example 11 | Comparative Example 16 | Comparative Example 17 | Comparative Example 18 |
|---|---|---|---|---|---|---|
| Raw materials | Hexamethylenediamine | g | 322 | 322 | 322 | 322 |
| | Adipic acid | g | 418 | 418 | 418 | 418 |
| | JEFF AMINE M1000 | g | 14.3 | - | - | 37.4 |
| | Ion-exchanged water | g | 250 | 250 | 250 | 250 |

(continued)

| | | | | Example 11 | Comparative Example 16 | Comparative Example 17 | Comparative Example 18 |
|---|---|---|---|---|---|---|---|
| Physical properties of polymer | Basic physical properties | ηr | - | 2.56 | 2.73 | 2.03 | 1.96 |
| | | [COOH] | mmol/g | 0.049 | 0.058 | 0.121 | 0.141 |
| | | $[NH_2]$ | mmol/g | 0.065 | 0.062 | 0.104 | 0.040 |
| | | Amount of terminal structure introduced (Rc) | mmol/g | 0.016 | - | - | 0.047 |
| | | Amount of terminal structure introduced | mass% | 1.6 | - | - | 4.7 |
| | | Rate of terminal structure introduced (Rt) | mol% | 12 | - | - | 21 |
| | Thermal characteristics | Tc | °C | 225 | 217 | 216 | 224 |
| | | ΔHc | J/g | 70 | 70 | 64 | 66 |
| | | Tm | °C | 261 | 261 | 260 | 260 |
| | | ΔHm | J/g | 80 | 80 | 71 | 70 |
| | | Tm-Tc | °C | 36 | 44 | 44 | 36 |
| | Molecular weight | Number average molecular weight (Mn) | - | 20500 | 21300 | 14200 | 14300 |
| | | Weight average molecular weight (Mw) | - | 51100 | 50700 | 33500 | 34000 |
| | | Mw/Mn | - | 2.49 | 2.38 | 2.36 | 2.38 |
| | Melt viscosity | | Pa·s | 60 | 154 | 54 | 25 |
| | Melt viscosity ratio | | % | 39 | - | - | 46 |
| | Water absorption | | % | 6.2 | 6.2 | 6.5 | 7.0 |
| Mechanical characteristics | Tensile strength | | MPa | 78 | 77 | 43 | 42 |
| | Tensile elongation | | % | 27 | 27 | 2 | 2 |

Comparison of Example 11 with Comparative Example 16 shows that the terminal modified polyamide 66 resin terminated with the structure represented by the above general formula (I) has a high melt-viscosity-reducing effect while having a tensile strength and a tensile elongation comparable to those of the polyamide 66 resin having a comparable weight average molecular weight. Comparison of Example 11 with Comparative Example 17 shows that the terminal modified polyamide 66 resin terminated with the structure represented by the above general formula (I) has a higher weight average molecular weight and a higher tensile strength and tensile elongation than the polyamide 66 resin having a comparable melt viscosity.

Industrial Applicability

The terminal modified polyamide resin of the present invention and the polyamide resin composition comprising the resin can be molded into a desired shape by any molding method such as injection molding, extrusion molding, blow molding, vacuum molding, melt spinning, or film forming. The molded article made of the terminal modified polyamide resin and the polyamide resin composition comprising the resin can be used, for example, as resin molded articles for electrical and electronic equipment components, automotive parts, and machine parts; fibers for clothing and industrial materials; and films for packaging and magnetic recording.

## Claims

**1.** A terminal modified polyamide resin having a relative viscosity (ηr), as measured at 25°C in a 98% sulfuric acid solution at a resin concentration of 0.01 g/ml, of 2.1 to 10, wherein the resin comprises 0.05 to 4.5% by mass of a terminal structure represented by general formula (I), and the resin is selected from polyamide 6, polyamide 66, polyamide 56, polyamide 410, polyamide 510, polyamide 610, polyamide 6/66, polyamide 6/12, polyamide 9T, polyamide 10T, and copolymers thereof, terminated with the structure represented by general formula (I):

$$-X-(R^1-O)_n-R^2 \qquad (I)$$

wherein n ranges from 2 to 100; $R^1$ represents a divalent hydrocarbon group of 2 to 10 carbon atoms; $R^2$ represents a monovalent hydrocarbon group of 1 to 30 carbon atoms; -X- represents -NH- or $-N(CH_3)-$; and n $R^1$s in the formula may be the same or different.

**2.** The terminal modified polyamide resin according to claim 1, comprising the terminal structure represented by the general formula (I) in an amount of 0.005 to 0.08 mmol/g.

**3.** The terminal modified polyamide resin according to claim 1 or 2, wherein n in the general formula (I) is 16 to 100.

**4.** The terminal modified polyamide resin according to any one of claims 1 to 3, wherein $R^1$ in the general formula (I) comprises at least a divalent saturated hydrocarbon group of 2 carbon atoms and a divalent saturated hydrocarbon group of 3 carbon atoms.

**5.** The terminal modified polyamide resin according to any one of claims 1 to 4, wherein the resin has a weight average molecular weight (Mw), as determined by gel permeation chromatography, of 40,000 to 400,000.

**6.** A polyamide resin composition comprising the terminal modified polyamide resin according to any one of claims 1 to 5.

**7.** A method for producing a molded article, the method comprising:
melt-molding the terminal modified polyamide resin according to any one of claims 1 to 5 or the polyamide resin composition according to claim 6.

**8.** A method for producing the terminal modified polyamide resin according to any one of claims 1 to 5, the method comprising:
binding a terminal modification agent to a terminal of a polyamide resin while polymerizing an amino acid, a lactam, and/or a diamine and a dicarboxylic acid, the terminal modification agent being in an amount of 0.05 to 4.5% by mass based on the total amount of the amino acid, the lactam, the diamine, and the dicarboxylic acid and being represented by general formula (II):

$$Y-(R^1-O)_n-R^2 \qquad (II)$$

wherein n ranges from 2 to 100; $R^1$ represents a divalent hydrocarbon group of 2 to 10 carbon atoms; $R^2$ represents a monovalent hydrocarbon group of 1 to 30 carbon atoms; Y- represents an amino group or an *N*-methylamino group; and n $R^1$s in the formula may be the same or different.

9. The method for producing a terminal modified polyamide resin according to claim 8, wherein the terminal modification agent represented by the general formula (II) has a number average molecular weight of 750 to 10,000.

10. The method for producing a terminal modified polyamide resin according to claim 8 or 9, wherein $R^1$ in the general formula (II) comprises at least a divalent saturated hydrocarbon group of 2 carbon atoms and a divalent saturated hydrocarbon group of 3 carbon atoms.

## Patentansprüche

1. Endständig modifiziertes Polyamidharz mit einer bei 25 °C in einer 98%igen Schwefelsäure-Lösung mit einer Harzkonzentration von 0,01 g/ml gemessenen relativen Viskosität ($\eta r$) von 2,1 bis 10, wobei das Harz 0,05 bis 4,5 Massen-% einer durch die allgemeine Formel (I) dargestellten endständigen Struktur umfasst und das Harz aus Polyamid 6, Polyamid 66, Polyamid 56, Polyamid 410, Polyamid 510, Polyamid 610, Polyamid 6/66, Polyamid 6/12, Polyamid 9T, Polyamid 10T und Copolymeren davon ausgewählt ist, die mit der durch die allgemeine Formel (I) dargestellten Struktur enden:

$$-X-(R^1-O)_n-R^1 \qquad (I)$$

worin n im Bereich von 2 bis 100 liegt; $R^1$ für eine zweiwertige Kohlenwasserstoffgruppe mit 2 bis 10 Kohlenstoffatomen steht; $R^2$ für eine einwertige Kohlenwasserstoffgruppe mit 1 bis 30 Kohlenstoffatomen steht; -X- für -NH- oder $-N(CH_3)-$ steht; und n $R^1$ in der Formel gleich oder unterschiedlich sein können.

2. Endständig modifiziertes Polyamidharz nach Anspruch 1, das die durch die allgemeine Formel (I) dargestellte endständige Struktur in einer Menge von 0,005 bis 0,08 mmol/g umfasst.

3. Endständig modifiziertes Polyamidharz nach Anspruch 1 oder 2, wobei n in der allgemeinen Formel (I) 16 bis 100 beträgt.

4. Endständig modifiziertes Polyamidharz nach einem der Ansprüche 1 bis 3, wobei $R^1$ in der allgemeinen Formel (I) zumindest eine zweiwertige gesättigte Kohlenwasserstoffgruppe mit 2 Kohlenstoffatomen und eine zweiwertige gesättigte Kohlenwasserstoffgruppe mit 3 Kohlenstoffatomen umfasst.

5. Endständig modifiziertes Polyamidharz nach einem der Ansprüche 1 bis 4, wobei das Harz ein mittels Gelpermeationschromatographie bestimmtes gewichtsmittleres Molekulargewicht (Mw) von 40.000 bis 400.000 aufweist.

6. Polyamidharz-Zusammensetzung, die ein endständig modifiziertes Polyamidharz nach einem der Ansprüche 1 bis 5 umfasst.

7. Verfahren zur Herstellung eines Formteils, wobei das Verfahren Folgendes umfasst:
das Schmelzformen eines endständig modifizierten Polyamidharzes nach einem der Ansprüche 1 bis 5 oder einer Polyamidharz-Zusammensetzung nach Anspruch 6.

8. Verfahren zur Herstellung eines endständig modifizierten Polyamidharzes nach einem der Ansprüche 1 bis 5, wobei das Verfahren Folgendes umfasst:
das Binden eines endständigen Modifikationsmittels an ein Ende eines Polyamidharzes während des Polymerisierens einer Aminosäure, eines Lactams und/oder eines Diamins und einer Dicarbonsäure, wobei das endständige Modifikationsmittel in einer Menge von 0,05 bis 4,5 Massen-% bezogen auf die Gesamtmenge der Aminosäure, des Lactams, des Diamins und der Dicarbonsäure vorliegt und durch die allgemeine Formel (II) dargestellt ist:

$$Y-(R1-O)_n-R^2 \qquad (II)$$

worin n im Bereich von 2 bis 100 liegt; $R^1$ für eine zweiwertige Kohlenwasserstoffgruppe mit 2 bis 10 Kohlenstoff-

atomen steht; $R^2$ für eine einwertige Kohlenwasserstoffgruppe mit 1 bis 30 Kohlenstoffatomen steht; Y für eine Aminogruppe oder eine N-Methylaminogruppe steht; und n $R^1$ in der Formel gleich oder unterschiedlich sein können.

**9.** Verfahren nach Anspruch 8 zur Herstellung eines endständig modifizierten Polyamidharzes, wobei das durch die allgemeine Formel (II) dargestellte endständige Modifikationsmittel ein zahlenmittleres Molekulargewicht von 750 bis 10.000 aufweist.

**10.** Verfahren nach Anspruch 8 oder 9 zur Herstellung eines endständig modifizierten Polyamidharzes, wobei $R^1$ in der allgemeinen Formel (II) zumindest eine zweiwertige gesättigte Kohlenwasserstoffgruppe mit 2 Kohlenstoffatomen und eine zweiwertige gesättigte Kohlenwasserstoffgruppe mit 3 Kohlenstoffatomen umfasst.

## Revendications

**1.** Résine de polyamide à terminaison modifiée ayant une viscosité relative ($\eta$r), telle que mesurée à 25°C dans une solution d'acide sulfurique à 98 % à une concentration de résine de 0,01 g/ml, de 2,1 à 10, dans laquelle la résine comprend de 0,05 à 4,5 % en masse d'une structure terminale représentée par la formule générale (I), et la résine est choisie parmi polyamide 6, polyamide 66, polyamide 56, polyamide 410, polyamide 510, polyamide 610, polyamide 6/66, polyamide 6/12, polyamide 9T, polyamide 10T et des copolymères de celles-ci, terminée par la structure représentée par la formule générale (I) :

$$= (R^1\text{-}O)_n\text{-}R^2 \qquad (I)$$

où n est compris entre 2 et 100 ; $R^1$ représente un groupe hydrocarboné divalent de 2 à 10 atomes de carbone ; $R^2$ représente un groupe hydrocarboné monovalent de 1 à 30 atomes de carbone ; -X- représente -NH- ou -N($CH_3$)- ; et n $R^1$ dans la formule peuvent être identiques ou différents.

**2.** Résine de polyamide à terminaison modifiée selon la revendication 1, comprenant la structure terminale représentée par la formule générale (I) en une quantité de 0,005 à 0,08 mmol/g.

**3.** Résine de polyamide à terminaison modifiée selon la revendication 1 ou 2, dans laquelle n dans la formule générale (I) est de 16 à 100.

**4.** Résine de polyamide à terminaison modifiée selon l'une quelconque des revendications 1 à 3, dans laquelle $R^1$ dans la formule générale (I) comprend au moins un groupe hydrocarboné saturé divalent de 2 atomes de carbone et un groupe hydrocarboné saturé divalent de 3 atomes de carbone.

**5.** Résine de polyamide à terminaison modifiée selon l'une quelconque des revendications 1 à 4, dans laquelle la résine a un poids moléculaire moyen en poids (Mw), tel que déterminé par chromatographie par perméation de gel, de 40 000 à 400 000.

**6.** Composition de résine de polyamide comprenant la résine de polyamide à terminaison modifiée selon l'une quelconque des revendications 1 à 5.

**7.** Procédé de production d'un article moulé, le procédé comprenant :
un moulage par fusion de la résine de polyamide à terminaison modifiée selon l'une quelconque des revendications 1 à 5 ou de la composition de résine de polyamide selon la revendication 6.

**8.** Procédé de production de la résine de polyamide à terminaison modifiée selon l'une quelconque des revendications 1 à 5, le procédé comprenant l'étape consistant à :
lier un agent de modification de terminaison à une terminaison d'une résine de polyamide tout en polymérisant un acide aminé, un lactame et/ou une diamine et un acide dicarboxylique, l'agent de modification de terminaison étant en une quantité de 0,05 à 4,5 % en masse sur la base de la quantité totale de l'acide aminé, du lactame, de la diamine et de l'acide dicarboxylique et étant représenté par la formule générale (II) :

$$Y\text{-}(R^1\text{-}O)_n\text{-}R^2 \qquad (II)$$

où n est compris entre 2 et 100 ; $R^1$ représente un groupe hydrocarboné divalent de 2 à 10 atomes de carbone ;

$R^2$ représente un groupe hydrocarboné monovalent de 1 à 30 atomes de carbone ; Y- représente un groupe amino ou un groupe *N*-méthylamino ; et n $R^1$ dans la formule peuvent être identiques ou différents.

**9.** Procédé de production d'une résine de polyamide à terminaison modifiée selon la revendication 8, dans lequel l'agent de modification de terminaison représenté par la formule générale (II) a un poids moléculaire moyen en nombre de 750 à 10 000.

**10.** Procédé de production d'une résine de polyamide à terminaison modifiée selon la revendication 8 ou 9, dans lequel $R^1$ dans la formule générale (II) comprend au moins un groupe hydrocarboné saturé divalent de 2 atomes de carbone et un groupe hydrocarboné saturé divalent de 3 atomes de carbone.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6145345 A
- US 5387651 A
- WO 2012132084 A
- WO 2003002668 A
- US 6399713 B


### Non-patent literature cited in the description


- Journal of science (J.Polym.Sci.). Polymer chemistry edition (Polym.Chem.). 2003, vol. 41, 1341-1346